(19) **Europäisches Patentamt**
**European Patent Office**
**Office européen des brevets**

(11) **EP 3 693 282 B1**

(12) **EUROPEAN PATENT SPECIFICATION**

(45) Date of publication and mention
of the grant of the patent:
**03.11.2021 Bulletin 2021/44**

(51) Int Cl.:
***B29C 65/08*** *(2006.01)*      ***B29C 65/50*** *(2006.01)*
***B29C 65/74*** *(2006.01)*      ***B65B 15/00*** *(2006.01)*
***B65B 51/22*** *(2006.01)*      ***B65B 51/30*** *(2006.01)*
***B65B 9/12*** *(2006.01)*

(21) Application number: **18864400.9**

(22) Date of filing: **03.10.2018**

(86) International application number:
**PCT/JP2018/037062**

(87) International publication number:
**WO 2019/069986 (11.04.2019 Gazette 2019/15)**

(54) **ULTRASONIC SEALING ANVIL AND ULTRASONIC SEALING APPARATUS**

ULTRASCHALLSCHWEISSAMBOSS UND ULTRASCHALLSCHWEISSVORRICHTUNG

ENCLUME DE SOUDAGE PAR ULTRASONS ET APPAREIL DE SOUDAGE PAR ULTRASONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2017 JP 2017193553**

(43) Date of publication of application:
**12.08.2020 Bulletin 2020/33**

(73) Proprietor: **Toppan Printing Co., Ltd.
Tokyo 110-0016 (JP)**

(72) Inventor: **YUHARA, Noritaka
Tokyo 110-0016 (JP)**

(74) Representative: **TBK
Bavariaring 4-6
80336 München (DE)**

(56) References cited:
**EP-A2- 1 066 951       WO-A1-2017/038330
WO-A1-2017/038330    WO-A1-2017/057244
GB-A- 2 028 224       JP-B2- 3 904 675
JP-Y1- S5 010 291**

## Description

[Technical Field]

The present invention relates to an ultrasonic sealing technique for bonding a laminate of two or more sheet members at a strip-shaped sealing position (welding position). More particularly, the present invention relates to a technique suitable for transversely sealing (ultrasonic sealing) tubular-shaped laminates of packaging material which constitute paper containers that accommodate liquids or solids.

[Background Art]

Paper containers for liquids are widely used as convenient containers for accommodating liquid beverages such as fruit beverages, tea, coffee, milk beverages and soup, and alcoholic drinks such as sake and shochu. Such containers have a shape such as a gable-top shape, a brick shape, or a cylindrical shape.

For example, in production of brick-shaped containers, scores for containers are formed on a packaging material, which is composed of a paper layer and thermoplastic resin layers disposed on the front and back surfaces of the paper layer, and an edge protection tape is adhered to an end portion of the packaging material. Then, the packaging material is formed into a tubular shape, and the end portions of the packaging material are overlapped and bonded to each other to form a tubular packaging material. The lower end of the tubular packaging material is transversely bonded to thereby seal the lower end of the tubular packaging material. Subsequently, after the tubular packaging material is filled with contents, a spout position (upper end) of the container is sealed to be divided in a transverse direction by a liquid-pouch sealing technique. Then, the tubular packaging material is formed into a three-dimensional shape of the container.

The tubular packaging material is sealed in the transverse direction by using an ultrasonic sealing apparatus, for example, as disclosed in Patent Literature 1.

In the ultrasonic sealing apparatus, a sealing position of the container is pressed between an end face of a horn and an end face of an anvil, which face each other, and the horn is ultrasonically vibrated to seal the packaging material. That is, by the ultrasonic vibration, thermoplastic resin on the surface of the packaging material is melted by heat generated at the interface of the package material (at a position where surfaces of the overlapped sheet members are in contact with each other) to seal the packaging material. In particular, the sealing state of the container for liquids is of importance, and the seal described above requires strength sufficient to protect the contents and withstand transport impact and drop impact.

In order to improve sealability, a method disclosed in Patent Literature 2 may also be used. In the method, a concave-shaped step is provided at a position on a pressing surface of an end face of an anvil. At the position, the step can face a thick layer portion (bonded portion) at which a large number of sheet members are overlapped with each other. The step is used to address a difference in thickness at a welding position to improve sealability.

[Citation List]

[Patent Literature]

[PTL 1] JP 4093775 B
[PTL 2] JP 3904675 B (Fig. 12 and the like)
[PTL 3] WO 2017/038330 A1
[PTL 4] EP 1 066 951 A2

WO 2017/038330 A1 discloses an ultrasonic sealing anvil having the features of the preamble of claim 1.

EP 1 066 951 A2 discloses an ultrasonic sealing apparatus, in which a laminated packaging material containing a thermoplastic resin layer and a paper layer is formed into a tubular form and the tubular laminated packaging material is transversely ultrasonic sealed, comprising a horn having an elongated and flat sealing face and an opposing jaw having an elongated action face pressing the laminated packaging material in cooperation with the sealing face of the horn, and the center portion in longitudinal direction of an action face of the opposing jaw on the action face narrower than both end portions is found.

[Summary of the Invention]

[Technical Problem]

When a paper packaging material is formed into a tubular shape, end portions of the packaging material are overlapped with each other, and the overlapped portion is bonded together. During the bonding, the tubular packaging material is clamped between an ultrasonic horn and an anvil so that the tubular packaging material is subjected to ultrasonic sealing in a direction perpendicular to a longitudinal direction of the tubular packaging material. At this time, the bonded overlapped portion has a large thickness and thus prevents application of uniform pressure to a strip-shaped sealing position. Thus, as described above, conventionally, a surface of the anvil that abuts the thick layer portion having a large thickness due to the bonding is shaved to form a concave portion to thereby apply more uniform pressure to the packaging material during ultrasonic sealing.

However, when the packaging material is misaligned with respect to the anvil in a sealing direction (direction perpendicular to the longitudinal direction of the tubular packaging material), part of the bonded portion (thick layer portion) does not fit in the step of the anvil and prevents application of uniform pressure, and this leads to leakage of the contents. In order to address the misalignment, in Patent Literature 2, the step formed on the anvil has an arched shape (circular arc shape) or a trapezoidal shape. That is, in Patent Literature 2, left and right surfaces of the step are inclined surfaces having a depth that continuously increases toward the bottom of the step. Thus, by providing the inclined surfaces as the left and right surfaces of the step, the attempt to address the misalignment of the bonded portion (thick layer portion) has been made. However, there has been a problem in which the step having the inclined surfaces is insufficient for application of uniform pressure.

The present invention has been made in view of the above issue, and has an object to provide an ultrasonic sealing anvil capable of applying more uniform sealing pressure in a sealing direction.


[Solution to Problem]


According to the study by the inventors, even when the step of the anvil has a shape having inclined surfaces such as a trapezoidal shape, the inclined surfaces of the step apply excessive pressure to the thick bonded portion. This has made it difficult to apply more uniform pressure.

It is the object of the present invention to provide an improved ultrasonic sealing anvil by which the above problems are overcome. This object is solved by an ultrasonic sealing anvil having the features of claim 1. Further developments are stated in the dependent claims. An ultrasonic sealing apparatus comprising the ultrasonic sealing anvil is stated in claim 7.


[Advantageous Effects of the Invention]


According to the aspect of the present invention, when a packaging material and the anvil come in excessively strong contact with each other to increase pressure applied to the step of the end face of the anvil, the packaging material is pushed into the groove provided on the inclined surfaces in the step, thereby reducing the pressure. As a result, the aspect of the present invention can apply more uniform pressure to an ultrasonic sealed portion.


[Brief Description of the Drawings]


   Fig. 1 is a schematic side view illustrating an ultrasonic sealing apparatus of an embodiment of the present invention.
   Fig. 2 is a view illustrating a layer structure of a packaging material.
   Fig. 3 is a set of views illustrating a tubular packaging material, in which (a) is a perspective view, and (b) is a cross-sectional view taken along line I-I of (a).
   Fig. 4 is a perspective view illustrating a shape of an anvil of a first embodiment of the present invention.
   Fig. 5 is a plan view illustrating the shape of the anvil of the first embodiment of the present invention.
   Fig. 6 is a side view illustrating a shape of a step of embodiments of the present invention.
   Fig. 7 is a view illustrating a reduction in pressure due to a groove.
   Fig. 8 is a cross-sectional view illustrating other examples of the groove.
   Fig. 9 is a schematic diagram illustrating a shape of an end of the anvil of a second embodiment of the present invention.
   Fig. 10 is a plan view illustrating a shape of an array of block members.
   Fig. 11 is a schematic diagram illustrating a shape of a tubular packaging material during sealing.
   Fig. 12 is a plan view illustrating a modification of block members.


[Description of the Embodiments]


Embodiments of the present invention will be described with reference to the drawings.


[First embodiment]


A first embodiment will be described.


(Ultrasonic sealing apparatus)


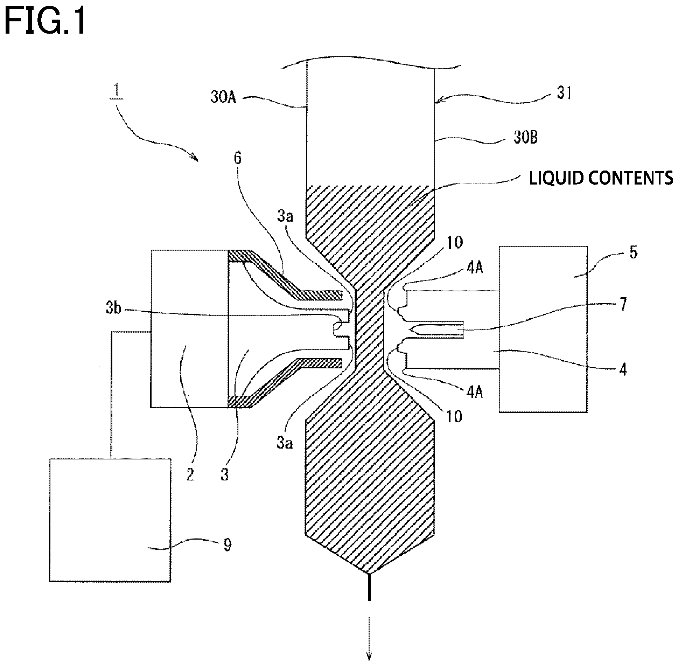

As shown in a schematic view of Fig. 1, an ultrasonic sealing apparatus 1 includes an ultrasonic oscillator 9, a converter 2 which is an ultrasonic transducer, a horn 3 and an anvil 4. Reference sign 5 indicates a jaw that supports the anvil 4. Reference sign 6 indicates a horn cover that protects the horn 3.

The converter 2 converts electric power supplied from the ultrasonic oscillator 9 into ultrasonic vibration, and when the generated vibration reaches the horn 3, an end of the horn 3 is ultrasonically vibrated.

The present embodiment illustrates an example in which two rows of portions on the upper and lower sides are sealed at the same time. That is, in this example, an upper opening of a preceding paper container and a lower end of a subsequent paper container are simultaneously sealed. Therefore, as shown in Fig. 1, the end of the horn 3 is branched into two parts, and end faces of the two parts have respective two rows of vibration applying surfaces 3a. The vibration applying surface 3a has a strip shape (or rectangular strip shape) such that the two rows of vibration applying surfaces 3a extend parallel to each other. In Fig. 1, the two rows of vibration applying surfaces 3a extend in a direction perpendicular to the sheet of drawing. Further, between the two rows of vibration applying surfaces 3a, a groove 3b is provided.

(Packaging material)

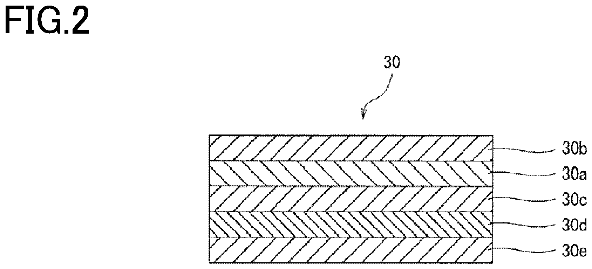

For example, as shown in Fig. 2, a packaging material 30 (sheet member) that constitutes a container has a substrate layer 30a made of paper and an exterior resin layer 30b disposed on the front surface of the substrate layer 30a. On the back surface of the substrate layer 30a, a resin film 30c, a barrier layer 30d, and an interior resin layer 30e are disposed in this order. Examples of resin used for the exterior resin layer 30b, the resin film 30c, and the interior resin layer 30e include, but are not limited to, a polyethylene resin. However, at least the interior resin layer 30e is made of thermoplastic resin. The barrier layer 30d is composed of a vapor deposition film deposited on the resin film 30c, an aluminum thin sheet, or the like to ensure barrier properties of the container suitable for the contents to be accommodated.

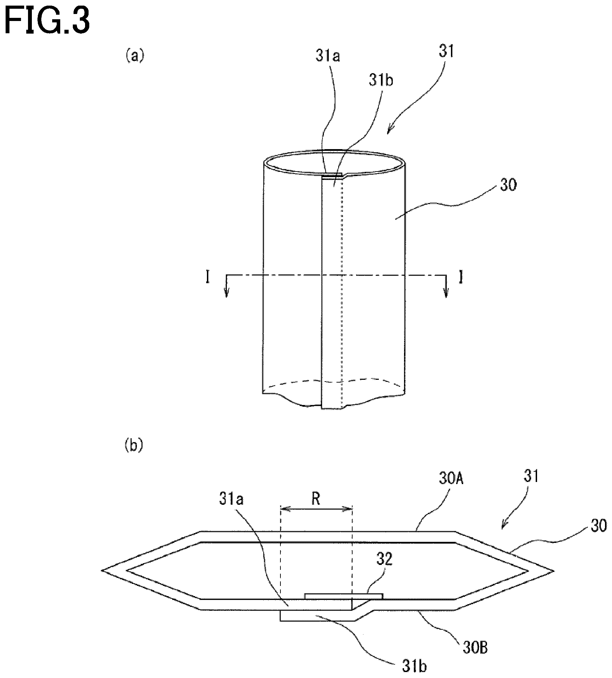

As shown in Fig. 3, the packaging material 30 is formed into a tubular packaging material 31 by overlapping end portions of the packaging material 30 with each other with the interior resin layer 30e inward. This tubular packaging material 31 has an elongated tubular shape. A bonded portion having a relatively large thickness in which an end portion 31a and an end portion 31b of the packaging material 30 are overlapped with each other to form the tubular packaging material 31 is referred to as a thick layer portion R. As shown in Fig. 3 (a), the thick layer portion R extends in an axial direction of the elongated tubular packaging material 31.

As shown in Fig. 3 (b), an edge protection tape 32 is adhered to the thick layer portion R. The edge protection tape 32 is adhered to the inner surface of the tubular packaging material 31.

The tubular packaging material 31, at least when sealed, is collapsed into a flat shape as shown in Fig. 3 (b). Then, as shown in Fig. 1, the tubular packaging material 31 is pressed between the horn 3 and the anvil 4 from the upper and lower sides in the sheet of Fig. 3 (b) such that packaging materials 30A and 30B, which constitute the sheet members, are overlapped with each other to form a two-layered laminate at a sealing position. However, at part of the thick layer portion R, four sheet members including the edge protection tape 32 are overlapped with each other.

(Anvil)

As shown in Fig. 1, an end face 4A of the anvil 4 is arranged to face the end face of the horn 3.

The end face 4A of the anvil 4 is provided with two rows of pressing surfaces 10 composed of ends of projections projecting toward the respective vibration applying surfaces 3a. The pressing surfaces 10 face the respective vibration applying surfaces 3a formed on the end face of the horn 3 with the overlapped sheet members interposed therebetween. The pressing surfaces 10 and the vibration applying surfaces 3a can clamp a laminate composed of two or more sheet members with a preset load in a thickness direction.

In the present embodiment, as shown in Fig. 1, the width of the pressing surface 10 (width of the pressing surface 10 facing the vibration applying surface 3a via the laminate) is smaller than the width of the vibration applying surface 3a.

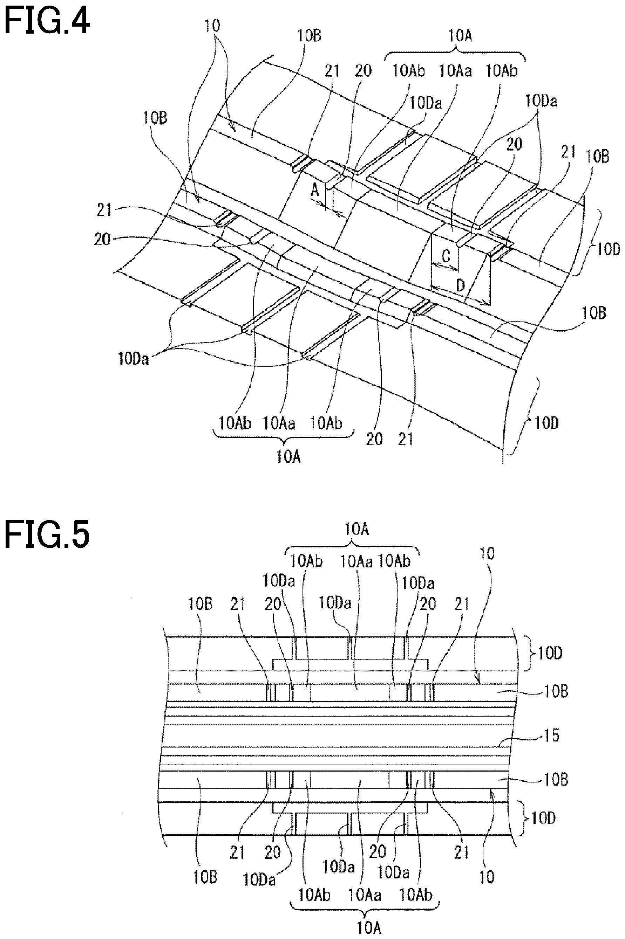

As shown in a perspective view of Fig. 4 and a plan view of Fig. 5, the pressing surface 10 has a strip shape that extends along a welding position of the sheet members. The pressing surface 10 has a step 10A that has a concave shape formed in a center portion of the pressing surface 10 in a longitudinal direction and a pair of extending surfaces 10B that are continuous to both sides of the step 10A. The pair of extending surfaces 10B are flat surfaces that extend leftward and rightward along the welding position with the step 10A interposed therebetween. The present embodiment illustrates an example in which sealing surfaces of the extending surfaces 10B have a rectangular shape. For example, the shape of the sealing surfaces of the left and right extending surfaces 10B may have a width which continuously or stepwisely increases with an increase in distance from the center of the sealed portion.

In the present embodiment, as shown in Figs. 4 and 5, on the side of the strip-shaped welding surface 10, a resin guiding portion 10D is provided. During welding on the pressing surface 10, the resin guiding portion 10D laterally guides resin that has melted and flowed laterally, that is, the resin guiding portion 10D controls a flow of melted resin, thereby preventing formation of a melted resin mass which is easily peeled off.

On the side of the step 10A, the resin guiding portion 10D of the present embodiment has a groove 10Da that guides the melted resin laterally and outward (in a direction away from the pressing surface 10). A flow of melted resin is controlled by the groove 10Da.

As shown in Figs. 4 and 5, on the base (extending surface 10B) side of the groove 10Da of the resin guiding portion 10D, a branch root portion that extends along the extending surface 10B is provided. The branch root portion is a groove for guiding resin that has melted and flowed laterally to the groove 10Da, and storing the resin. In Figs. 4 and 5, the branch root portion is provided only at a position corresponding to the step 10A. However, the branch root portion may be extended leftward and rightward, for example, to have the same length as the extending surface 10B along the extending surface 10B.

(Step 10A)

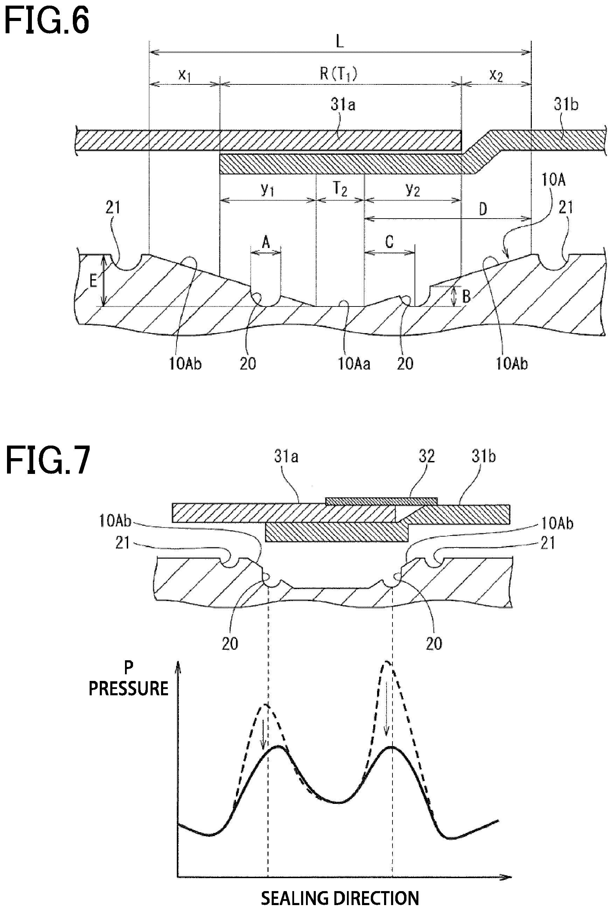

As shown in Fig. 6, in view of the fact that a large number of sheet members are laminated at the thick layer portion R, the step 10A is formed at a position at which the step 10A can abut the overlapped portion, and has a concave shape corresponding to the laminated portion.

The step 10A of the present embodiment is a concave portion having a trapezoidal shape in side view, and is composed of a bottom surface 10Aa in the center, and left and right inclined surfaces 10Ab that are continuous to the bottom surface 10Aa. The step 10A has a length longer than the length of the thick layer portion R. As shown in Fig. 6, the step 10A is formed so that both left and right ends of the thick layer portion R are located on the respective inclined surfaces 10Ab.

The shape of the step 10A is not limited to the trapezoidal shape in side view. The step 10A may have a circular arc shape, a triangular shape, or the like. In short, the step 10A only needs to have the inclined surfaces 10Ab on the left and right sides. When the step 10A has a circular arc shape, the left and right inclined surfaces 10Ab are curved surfaces. When the step 10A has a circular arc shape or a triangular shape, a single point (point-like part) is located at the lowest position (corresponding to the bottom surface 10Aa).

The inclined surface 10Ab of the step 10A has one or more grooves 20 that extend in a width direction of the pressing surface 10. Figs. 4 to 6 illustrate the case where the inclined surface 10Ab has one groove 20.

Fig. 4 and the like illustrate an example in which the groove 20 linearly extends with a constant width. The groove 20 may have a width changing in the extending direction, or the groove 20 may extend in a curved manner or a meandering manner.

The groove 20 has a width A, for example, in the range of 0.5 mm or more and 1.5 mm or less. In the present embodiment, due to the groove 20 having a width in this range, when the groove 20 abuts the thick layer portion R, pressure applied to the thick layer portion R is mitigated. Also, when the groove 20 abuts the sealed portion other than the thick layer portion R, pressure necessary for welding the tubular packaging material 31 is applied to the sealed portion.

The groove 20 formed on the inclined surface 10Ab has a depth B, for example, in the range of 0.05 mm or more and 1.0 mm or less. In the present embodiment, due to the groove 20 having a depth B in this range, when the groove 20 abuts the thick layer portion R, pressure applied to the thick layer portion R is mitigated. Also, when the groove 20 abuts the sealed portion other than the thick layer portion R, pressure necessary for welding the tubular packaging material 31 is applied to the tubular packaging material 31.

With regard to a position on the inclined surface 10Ab at which the groove 20 is formed, the depth B of the groove 20 is, for example, twice or less a distance in a depth direction from the lowest position (bottom surface 10Aa) of the step 10A to a position C on the inclined surface 10Ab at which the groove 20 is formed. Alternatively, the depth B of the groove 20 formed on the inclined surface 10Ab is preferably a distance E in the depth direction from the bottom surface 10Aa located at the lowest position of the step 10A to the position on the inclined surface 10Ab at which the groove 20 is formed or a distance close to the distance E. A distance close to the distance E means, for example, the distance E with a margin in the range of $\pm 0.2$ mm.

The position C of the groove 20 formed on the inclined surface 10Ab is preferably, for example, set so that a center position of the groove 20 in a width direction is a position at which the groove 20 can face an end of the thick layer portion R of the sheet members in a direction along the welding position or a position on the inclined surface 10Ab at which the inclined surface 10Ab has a greater depth than the position at which the groove 20 can face the end of the thick layer portion R (the range indicated by reference sign y in Fig. 6).

In the present embodiment, the extending surface 10B has a second groove 21 at a position on the inclined surface 10Ab side (step 10A side).

The second groove 21 has a width, for example, in the range of 0.5 mm or more and 1.5 mm or less. In the present embodiment, due to the second groove 21 having a width in this range, when the second groove 21 abuts the thick layer portion R, pressure applied to the thick layer portion R is mitigated. Also, when the second groove 21 abuts the sealed portion other than the thick layer portion R, pressure necessary for welding the tubular packaging material 31 is applied to the sealed portion.

Furthermore, the second groove 21 has a depth, for example, in the range of 0.05 mm or more and 1 mm or less. In the present embodiment, due to the second groove 21 having a depth in this range, when the second groove 21 abuts the thick layer portion R, pressure applied to the thick layer portion R is mitigated. Also, when the groove 20 abuts the sealed portion other than the thick layer portion R, pressure necessary for welding the tubular packaging material 31 is applied to the tubular packaging material 31.

A distance from an edge of the second groove 21 on the inclined surface 10Ab side to the inclined surfaces 10Ab of the step 10A adjacent to the edge is, for example, a distance in the range of 0 mm or more and 1.5 mm or less.

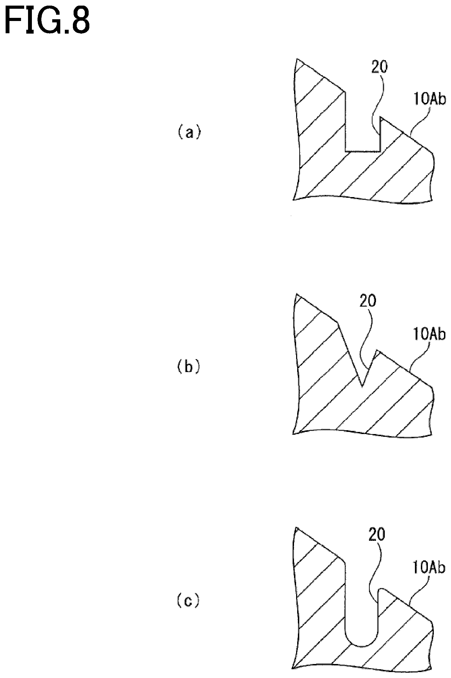

A cross-sectional shape of the groove 20 and the second groove 21 is, for example, a curved shape such as a semi-circular shape. The cross-sectional shape of the groove 20 and the second groove 21 does not necessarily have to have the curved shape, but may have a triangular shape or a rectangular shape. The cross-sectional shape of the groove 20 and the second groove 21 may be individually designed. Fig. 8 shows other examples.

The cross-sectional shape of the groove 20 and the second groove 21 is preferably a shape having an axis extending in a direction in which the thick layer portion R is pressed. A pointed portion may damage the packaging material 30, and thus the edges of the groove 20 and the second groove 21 are preferably chamfered or rounded.

Further, as shown in Figs. 1 and 5, a groove that serves as a knife slit 15, in which a cutting blade 7 is movable forward and backward, is disposed between the two rows of pressing surfaces 10. The cutting blade 7 is movable forward and backward relative to the horn 3, and is used to cut between the two rows of sealing positions to thereby separate the preceding paper container and the subsequent paper container.

(Operation and others)

Fig. 1 illustrates a state in which a brick-shaped paper container for liquids, which has been sealed at the lower end thereof and filled with liquid contents, is about to be sealed at an opening (upper end) thereof while the lower end of the subsequent container is simultaneously about to be sealed.

In the state shown in Fig. 1, the tubular packaging material 31 is clamped between the vibration applying surfaces 3a of the horn 3 and the end face of the anvil 4 from opposite sides with a predetermined load so that the tubular packaging material 31 is collapsed to form a laminate composed of the laminated sheet members. Subsequently, when the vibration applying surfaces 3a of the horn 3 are ultrasonically vibrated, the interior resin layer 30e is melted to seal the tubular packaging material 31 at two rows of sealing positions, which extend in the direction perpendicular to the sheet of the drawing.

At this time, the step 10A formed at a position corresponding to the thick layer portion R presses the thick layer portion R. The step 10A has a shape suitable for applying possible optimal pressure to the thick layer portion R in the thickness direction when the thick layer portion R abuts the step 10A without any misalignment. That is, the inclined surfaces 10Ab which are the side surfaces of the step 10A have a tapered shape, and thus the depth of the inclined surfaces 10Ab continuously changes so that the depth increases toward the bottom surface 10Aa. Therefore, even if the thick layer portion R is misaligned to some extent in the step 10A, the inclined surfaces 10Ab reduces a change in pressure applied to the surface to be sealed.

However, even when the step 10A has the inclined surfaces 10Ab considering the misalignment of the thick layer portion R, if the inclined surfaces 10Ab do not have the groove 20, the pressure in the sealing direction has a distribution indicated by a dashed line in Fig. 7. The distribution in Fig. 7 shows that the pressure distribution has peaks on the inclined surfaces 10Ab.

On the other hand, it has been confirmed that, as in the embodiment, when the inclined surfaces 10Ab have the groove 20, the peaks of the pressure on the inclined surfaces 10Ab are greatly reduced, thereby making the pressure in the sealing direction more uniform. The example in Fig. 7 indicates the depth of the bottom of the groove 20 is the same as the depth of the bottom surface 10Aa.

The effect of the groove 20 is effective when the position of the thick layer portion R is misaligned from the center of the step 10A. Specifically, on one of the inclined surfaces 10Ab on which the portion overlapped with the thick layer portion R becomes small, the pressure is reduced accordingly, and even when the pressure is increased on the other inclined surface 10Ab on which the portion overlapped with the thick layer portion R is increased, the pressure is reduced by the groove 20, thereby making the pressure in the sealing direction uniform.

In the present embodiment, when the thick layer portion R is misaligned to a relatively large extent and placed beyond the inclined surface 10Ab, the second groove 21 formed on the extending surface 10B mitigates the pressure applied to part of the thick layer portion R abutting a portion having no step 10A.

Fig. 6 is a diagram illustrating a relationship between a length L of the step 10A, and the overlapped portion R of the end portion 31a and the end portion 31b of the packaging material 30.

As shown in Fig. 6, the length L of the step 10A is expressed by the following Formulas (1) and (2). In Formula (1), $T_1$ is the length of the overlapped portion R in the sealing direction. In Formula (2), $T_2$ is the length of the bottom surface 10Aa in the sealing direction. In Formulas (1) and (2), $x_1$ is the length of deviation in the sealing direction between an end (on the left side of Fig. 6) of the step 10Aa in the sealing direction and the overlapped portion R, in a state where the step 10A is pressed against the overlapped portion R. Furthermore, $x_2$ is the length of deviation in the sealing direction between the other end (on the right side of Fig. 6) of the step 10A in the sealing direction and the overlapped portion R, in a state where the step 10A is pressed against the overlapped portion R.

Furthermore, D is the length shown in Fig. 6 from an end of the step 10A in the sealing direction to an end of the bottom surface 10Aa closer to the end of the step 10A.

$$L = T_1 + x_1 + x_2 \quad \cdots (1)$$

$$L = 2D + T_2 \quad \cdots (2)$$

Formulas (1) and (2) indicate that the lengths $T_1$ and $T_2$ have a relationship expressed by Formula (3).

$$T_2 = T_1 + x_1 + x_2 - 2D \cdots (3)$$

In the present embodiment, in the above relationship, for example, D may be in the range of 0.5 mm or more and 5.0 mm or less. The step 10A may be formed, for example, such that $x_1$ and $x_2$ are in the range of 0.0 mm or more and 1.5 mm or less.

In the embodiment of the present application, a relationship between $T_1$ and $T_2$, and $y_1$ and $y_2$ is expressed by Formula (4). Furthermore, $y_1$ and $y_2$, and $x_1$

and $x_2$ preferably have a relationship expressed by Formula (5).

$$T_1 = T_2 + y_1 + y_2 \qquad \cdots (4)$$

$$y_1 \geq x_1 \text{ and } y_2 \geq x_2 \qquad \cdots (5)$$

Providing $y_1$ and $y_2$ having equal lengths on both sides of $T_2$ is preferable in order to obtain uniform sealing.

During sealing, when the thermoplastic resin located between the vibration applying surface 3a and the pressing surface 10 is excessive, part of the melted thermoplastic resin is extruded laterally from the sealing position.

In the present embodiment, the extruded thermoplastic resin is led (guided) by the groove 10Da in the direction away from the pressing surface 10, thereby preventing formation of a resin mass which is easily peeled off. Thus, although a resin mass that is intermittently generated and has an irregular shape is a resin mass which is easily peeled off, in the present embodiment, the resin guiding portion 10D controls a flow of melted thermoplastic resin, thereby preventing generation of an irregular-shaped resin mass which is easily peeled off.

[Second embodiment]

A second embodiment of the present invention will be described with reference to the drawings.

A basic configuration of the present embodiment is the same as the first embodiment. That is, one of the configurations described in the first embodiment is employed as a configuration of the strip-shaped pressing surface 10.

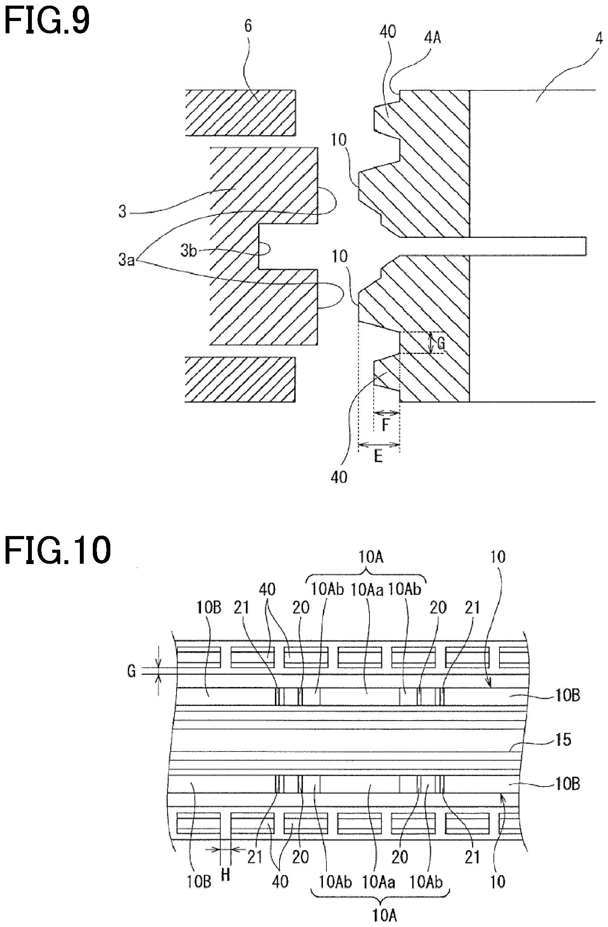

However, as shown in Fig. 9, the present embodiment differs from the first embodiment in that on the side of the strip-shaped pressing surface 10, a plurality of block members 40 are provided. An array of the plurality of block members 40 extends in the same direction as an extending direction of the pressing surface 10 while adjacent block members 40 are spaced from each other.

The block member 40 also serves as a resin flowing portion that controls a flow of melted thermoplastic resin.

Although the plurality of block members 40 may be provided on both sides of the pressing surface 10, the arrays of the plurality of block members 40 according to the present embodiment are provided with two rows of pressing surfaces 10 interposed therebetween.

A top face (end face) of the block member 40 has a height F lower than a height E of the pressing surface 10 or has the same height as an end face of the pressing surface 10. The heights E and F indicate, for example, the amount of projection from the end face 4A of the anvil 4. The heights E and F may be expressed as the amount of projection from a reference plane (not shown) set in the anvil 4.

Fig. 9 illustrates an example in which the vibration applying surface 3a and the block member 40 in a stationary state are not overlapped with each other when viewed in a projecting direction of the block member 40 (direction in which a laminate is clamped between the horn 3 and the anvil 4). When the vibration applying surface 3a and the block member 40 in a stationary state are overlapped with each other, the height of the block member 40 is preferably lower than the height of the pressing surface 10.

As shown in Fig. 10, the plurality of block members 40 are arrayed in the extending direction of the pressing surface 10.

Fig. 10 illustrates an example in which the block members 40 are spaced from the pressing surface 10 by a constant separation distance G. However, this is merely an example. For example, at the thick layer portion R, a relatively increased amount of melted thermoplastic resin tends to be generated in sealing. Therefore, on the side of the step 10A, a separation distance G from the pressing surface 10 to the block member 11 may be larger than a separation distance G at the other positions.

The separation distance G is, for example, in the range of 0.5 mm or more and 1.5 mm or less. The separation distance G out of this range may make it difficult to control a flow of melted resin.

A gap H between the adjacent block members 40 is, for example, in the range of 0.1 mm or more and 2.0 mm or less.

This is because when the gap H is less than 0.1 mm, it may be difficult to provide a space large enough to release air between the sheet members (packaging materials), and when the gap H is more than 2.0 mm, the melted resin may move outward.

(Operation and others)

In addition to the advantageous effects obtained by the configuration of the pressing surface 10 described in the first embodiment, the second embodiment also has the following advantageous effects.

As in the first embodiment, the tubular packaging material 31 is clamped between the vibration applying surfaces 3a of the horn 3 and the end face 4A of the anvil 4 from opposite sides at a predetermined pressure so that the tubular packaging material 31 is formed into a laminate and the vibration applying surfaces 3a of the horn 3 are ultrasonically vibrated. Accordingly, the thick layer portion R is sealed at two rows of sealing positions, and the interior resin layer 30e and the exterior resin layer 30b are melted to be sealed. Simultaneously, the interior resin layers 30e of the respective packaging materials 30A and 30B shown in Fig. 3 are melted together to be sealed in the direction perpendicular to the sheet of the drawing. At this time, the edge protection tape 32 is also fixed between the packaging materials 30A and 30B.

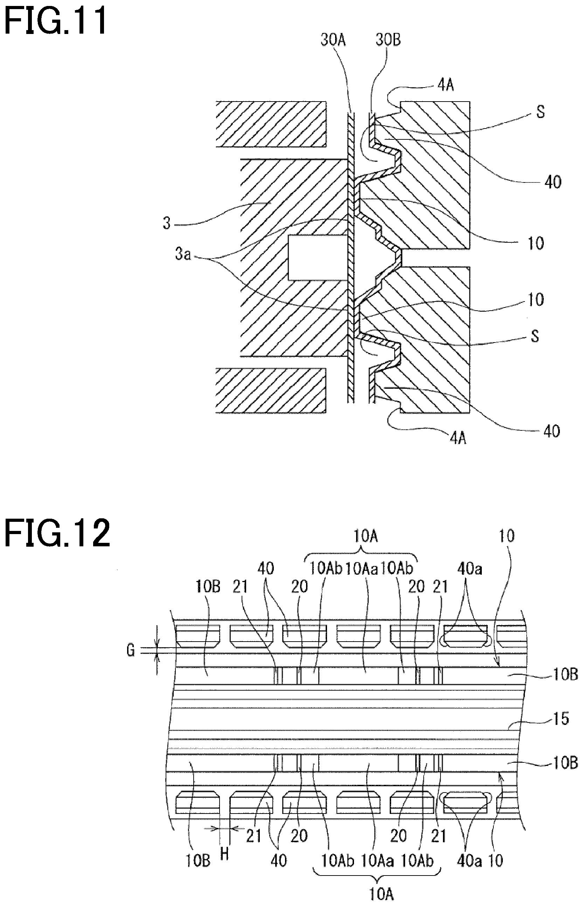

In this case, when the tubular packaging material 31 is pressed between the vibration applying surface 3a of the horn 3 and the end face 4A of the anvil 4 from opposite sides, as shown in Fig. 11, the packaging material 30B closer to the anvil 4 is deformed into a shape conforming to the end face 4A of the anvil 4. That is, at the sealing position between the vibration applying surface 3a and the pressing surface 10, the two overlapped packaging materials 30A and 30B are in close contact with each other while on the side of the packaging materials 30A and 30B, a strip-shaped space S extends along the sealing position. A cross-sectional shape of the space S is defined by the separation distance from the pressing surface 10 to the block member 40, and the height of the block member 40.

In the present embodiment, since there are the gaps H between the plurality of block members 40, the strip-shaped space S is not a sealed space. Accordingly, at the positions between the block members 40, the gaps H communicating with the outside of the block member 40 are more likely to be formed between the two packaging materials 30.

In this configuration, when the vibration applying surface 3a of the horn 3 is ultrasonically vibrated, the thermoplastic resin located between the vibration applying surface 3a and the pressing surface 10 is melted to seal the tubular packaging material 31, which is a laminate, at the sealing position between the vibration applying surface 3a and the pressing surface 10.

During the sealing, when excess thermoplastic resin is located between the vibration applying surface 3a and the pressing surface 10 is excessive, part of the melted thermoplastic resin is extruded laterally from the sealing position at a predetermined pressure.

The extruded thermoplastic resin flows into the strip-shaped space S, but is prevented from further moving outward due to the array of the plurality of block members 40. That is, the movement of the extruded thermoplastic resin is blocked by the array of the plurality of block members 40.

In addition, when the melted thermoplastic resin flows into the space S at a predetermined pressure, air present in the space S escapes outward through the gaps H between the block members 40, and thus the space S is depressurized. This prevents intrusion of air into the melted thermoplastic resin that has moved into the space S. That is, this prevents breakage of a melted resin mass due to intrusion of air into the melted resin mass.

Further, the melted resin mass is formed in conformity with the shape of the space S. That is, defects in the shape of thermoplastic resin are prevented.

Thus, by controlling a flow of extruded thermoplastic resin using the array of the plurality of block members 40, the thickness and width of a resin mass formed of the extruded thermoplastic resin can be controlled. Accordingly, even if the thermoplastic resin is excessively melted, it is possible to prevent formation of an irregular-shaped melted resin mass which is easily peeled off.

As a result, it is possible to prevent intrusion of a resin mass into the contents in the container.

The above embodiment illustrates an example in which the block member 40 has a rectangular shape when viewed in a direction in which the block member is provided. However, the shape of the block member 40 is not limited to this. For example, as shown in Fig. 12, edges of the block member 40 may be chamfered so that air in the space S is more likely to escape from the gaps H between the block members 40. At this time, the block member 40 has chamfered portions 40a.

A bottom surface of the space S is located at the same level as the gap H between the block members 40. Therefore, when the gap H between the block members 40 is excessively large, part of the melted resin that has been moved from the gap H into the space S is more likely to flow into the gap H. Accordingly, the height of the gap H between the block members 40 may be increased to be higher than the height of the surface between the pressing surface 10 and the array of the block members 40 (bottom surface of the space S). For example, the increase amount of the height of the gap H is in the range of 10% or more and 50% or less of the height of the block member 40. For example, by forming a single semicircular arc-shaped recess on the portion of the end face 4A located between the pressing surface 10 and the array of the block members 40, the surface between the pressing surface 10 and the array of the block members 40 becomes relatively low.

Example 1

Next, examples according to the present invention will be described.

(Example 1)

First, Example 1 will be described.

The following description will be given of the case where a brick-shaped paper container for liquids having the configuration of the packaging material 30 shown in Fig. 2 was produced by means of an ultrasonic sealing apparatus as shown in Fig. 1.

The packaging material 30 had an exterior resin layer 30b made of PE and having a thickness of 15 $\mu$m, a substrate layer 30a made of paper and having a thickness of 250 $\mu$m, a resin film 30c made of PE and having a thickness of 15 $\mu$m, a barrier layer 30d having a thickness of 12 $\mu$m, and an interior resin layer 30e made of PE and having a thickness of 50 $\mu$m. The barrier layer 30d was a vapor deposition film layer made of PET having barrier properties. The barrier layer 30d may be composed of aluminum or other barrier materials.

As shown in Figs. 4 and 6, in an anvil, the step 10A had a trapezoidal shape, and the left and right inclined surfaces 10Ab of the step 10A had the groove 20. The width A of the groove 20 was 0.5 mm. The depth B of the groove 20 was 0.2 mm. The positional relationship C of the groove 20 in the step 10A was in the range of 0 mm to y mm in Fig. 6 which was the length of the section in which the packaging materials were overlapped with each other. The depth E of the step 10A was approximately 0.3 mm, and the depth of the bottom surface 10Aa of the groove 20 was the same as the depth E of the step 10A.

In this case, as shown in Fig. 7, due to the inclined surfaces 10Ab of the anvil, at portions at which the anvil and the packaging material came in strong contact with each other, the pressure was increased. However, it was found that the packaging material was pushed into the groove 20 according to the present invention, thereby reducing the pressure applied to the portions at which the anvil and the packaging material were in strong contact with each other.

As a result of welding (sealing) by means of the ultrasonic sealing unit according to the present invention, when a surface of the packaging material was observed, it was confirmed that the packaging material was pushed into the groove 20 to thereby have a raised shape. Even when misalignment in the positional relationship of the packaging material actually occurred at the step 10A of the anvil, the excessive pressure during ultrasonic sealing was reduced and the ultrasonic sealing was appropriately performed.

Furthermore, by providing the resin guiding portion 10D, it was able to prevent the melted and extruded thermoplastic resin from forming a resin mass which was easily peeled off.

(Example 2)

Next, Example 2 will be described.

In Example 2, an anvil including the block members 40 of the second embodiment shown in Fig. 10 was used. Other than this, Example 2 was the same as Example 1.

When the anvil of Example 2 was used for sealing, the thickness and width of a resin mass formed of the melted and extruded thermoplastic resin was able to be controlled, thereby preventing formation of an irregular-shaped resin mass which was easily peeled off.

The scope of the present invention as defined in the appended claims is not limited to the illustrative embodiments illustrated and described above.

[Reference Signs List]

| | |
|---|---|
| 1: | Ultrasonic sealing apparatus |
| 3: | Horn |
| 3a: | Vibration applying surface |
| 4: | Anvil |
| 4A: | End face |
| 9: | Ultrasonic oscillator |
| 10: | Pressing surface |
| 10A: | Step |
| 10Aa: | Bottom surface |
| 10Ab: | Inclined surface |
| 10B: | Extending surface |
| 10D: | Resin guiding portion |
| 20: | Groove |
| 21: | Second groove |
| 30: | Packaging material |
| 31: | Tubular packaging material |
| 40: | Block member |
| R: | Thick layer portion |

**Claims**

1. An ultrasonic sealing anvil (4) having a strip-shaped pressing surface (10) that is adapted to face a vibration applying surface (3a) of an end of a horn (3) and is adapted to extend along a welding position of laminated sheet members (30) to be bonded by ultrasonic sealing, the pressing surface (10) having a step (10A) and a pair of extending surfaces (10B), the step (10A) having a concave shape formed at a position at which the step (10A) is adapted to abut a thick layer portion (R) with a relatively large thickness of the laminated sheet members (30), and the step (10A) having inclined surfaces (10Ab) on both left and right sides, the pair of extending surfaces (10B) being continuous to the respective inclined surfaces (10Ab) on the both left and right sides of the step (10A) and extending leftward and rightward along the welding position with the step (10A) interposed therebetween, **characterized in that**:
   each of the respective inclined surfaces (10Ab) has one or more grooves (20) that extend in a width direction of the pressing surface (10).

2. The ultrasonic sealing anvil (4) according to claim 1, **characterized in that**:
   the groove (20) has a width in a range of 0.5 mm or more and 1.5 mm or less.

3. The ultrasonic sealing anvil (4) according to claim 1 or 2, **characterized in that**:
   the groove (20) has a depth in a range of 0.05 mm or more and 1.0 mm or less.

4. The ultrasonic sealing anvil (4) according to any one of claims 1 to 3, **characterized in that**:
   a center position of the groove (20) in a width direction is a position at which the groove (20) can face an end of the thick layer portion (R) of the sheet members (30) in a direction along the welding position or a position on the inclined surface (10Ab) at which the inclined surface (10Ab) has a greater depth than the position at which the groove (20) can face the end of the thick layer portion (R).

5. The ultrasonic sealing anvil (4) according to any one of claims 1 to 4, **characterized in that**: on a side of the strip-shaped pressing surface (10), the ultrasonic sealing anvil (4) has a resin guiding portion (10D) that laterally guides melted resin.

6. The ultrasonic sealing anvil (4) according to any one of claims 1 to 5, **characterized in that**: on a side of the strip-shaped pressing surface (10), the ultrasonic sealing anvil (4) has a plurality of block members (40) that are arranged in the same direction as an extending direction of the pressing surface (10) and spaced from each other, and the plurality of block members (40) have a height not more than a height of the pressing surface (10).

7. An ultrasonic sealing apparatus comprising: the ultrasonic sealing anvil (4) according to any one of claims 1 to 6.

**Patentansprüche**

1. Ultraschallschweißbacke (4) mit einer streifenförmigen Andrückfläche (10), die daran angepasst ist, dass sie einer Schwingungsaufbringfläche (3a) eines Endes eines Horns (3) zugewandt ist, und daran angepasst ist, sich entlang einer Schweißposition laminierter Blattelemente (30) zu erstrecken, die durch Ultraschallschweißen verbunden werden, wobei die Andrückfläche (10) einen Absatz (10A) und ein Paar an Erstreckungsflächen (10B) hat, wobei der Absatz (10A) eine konkave Form hat, die an einer Position ausgebildet ist, an der der Absatz (10A) daran angepasst ist, an einem dicken Lagenabschnitt (R) mit einer relativ hohen Dicke der laminierten Blattelemente (30) anzuliegen, und der Absatz (10A) geneigte Flächen (10Ab) an sowohl einer linken als auch einer rechten Seite hat, wobei die als Paar vorgesehenen Erstreckungsflächen (10B) an den jeweiligen geneigten Flächen (10Ab) an sowohl der linken als auch der rechten Seite des Absatzes (10A) fortlaufend sind und sich nach links und nach rechts entlang der Schweißposition erstrecken, wobei der Absatz (10A) zwischen ihnen angeordnet ist, **dadurch gekennzeichnet, dass**: jede der jeweiligen geneigten Flächen (10Ab) eine oder mehrere Nuten (20) hat, die sich in einer Breitenrichtung der Andrückfläche (10) erstrecken.

2. Ultraschallschweißbacke (4) gemäß Anspruch 1, **dadurch gekennzeichnet, dass**: die Nut (20) eine Breite in einem Bereich von 0,5 mm oder mehr und 1,5 mm oder weniger hat.

3. Ultraschallschweißbacke (4) gemäß Anspruch 1 oder 2, **dadurch gekennzeichnet, dass**: die Nut (20) eine Tiefe in einem Bereich von 0,05 mm oder mehr und 1,0 mm oder weniger hat.

4. Ultraschallschweißbacke (4) gemäß einem der Ansprüche 1 bis 3, **dadurch gekennzeichnet, dass**: eine Mittenposition der Nut (20) in einer Breitenrichtung eine Position ist, an der die Nut (20) einem Ende des dicken Lagenabschnittes (R) der Blattelemente (30) in einer Richtung entlang der Schweißposition zugewandt sein kann, oder eine Position an der geneigten Fläche (10Ab) ist, an der die geneigte Fläche (10Ab) eine größere Tiefe hat als die Position, an der die Nut (20) dem Ende des dicken Lagenabschnittes (R) zugewandt sein kann.

5. Ultraschallschweißbacke (4) gemäß einem der Ansprüche 1 bis 4, **dadurch gekennzeichnet, dass**: an einer Seite der streifenförmigen Andrückfläche (10) die Ultraschallschweißbacke (4) einen Kunststoffführungsabschnitt (10D) hat, der seitlich geschmolzenen Kunststoff führt.

6. Ultraschallschweißbacke (4) gemäß einem der Ansprüche 1 bis 5, **dadurch gekennzeichnet, dass**: an einer Seite der streifenförmigen Andrückfläche (10) die Ultraschallschweißbacke (4) eine Vielzahl an Blockelementen (40) hat, die in der gleichen Richtung wie die Erstreckungsrichtung der Andrückfläche (10) angeordnet sind und voneinander beabstandet sind, und die in Vielzahl vorgesehenen Blockelemente (40) eine Höhe von nicht mehr als eine Höhe der Andrückfläche (10) haben.

7. Ultraschallschweißvorrichtung mit: der Ultraschallschweißbacke (4) gemäß einem der Ansprüche 1 bis 6.

**Revendications**

1. Enclume de soudage par ultrasons (4) ayant une surface de pression en forme de bande (10) qui est adaptée pour faire face à une surface d'application de vibration (3a) d'une extrémité d'un bras (3) et est adaptée pour s'étendre le long d'une position de soudage des éléments de feuille stratifiés (30) à relier par soudage par ultrasons, la surface de pression (10) ayant un gradin (10A) et une partie de surface d'extension (10B), le gradin (10A) ayant une forme concave formée dans une position dans laquelle le gradin (10A) est adapté pour venir en butée contre une partie de couche épaisse (R) avec une épaisseur relativement importante des éléments de feuille stratifiés (30), et le gradin (10A) ayant des surfaces inclinées (10Ab) à la fois sur les côtés gauche et droit, la paire de surfaces d'extension (10B) étant continue jusqu'aux surfaces inclinées (10Ab) respectives à la fois sur les côtés gauche et droit du gradin (10A) et s'étendant vers la gauche et vers la droite le long de la position de soudage avec le gradin (10A) intercalé entre elles, **caractérisée en ce que** : chacune des surfaces inclinées (10Ab) respectives a une ou plusieurs rainures (20) qui s'étendent dans une direction de largeur de la surface de pression (10).

2. Enclume de soudage par ultrasons (4) selon la revendication 1, **caractérisée en ce que** : la rainure (20) a une largeur dans une plage de 0,5 mm ou plus et de 1,5 mm ou moins.

3. Enclume de soudage par ultrasons (4) selon la revendication 1 ou 2, **caractérisée en ce que** : la rainure (20) a une profondeur dans une plage de 0,05 mm ou plus et de 1,0 mm ou moins.

4. Enclume de soudage par ultrasons (4) selon l'une quelconque des revendications 1 à 3, **caractérisée en ce que** : une position centrale de la rainure (20) dans une direction de largeur est une position dans laquelle la rainure (20) peut faire face à une extrémité de la partie de couche épaisse (R) des éléments de feuille (30) dans une direction le long de la position de soudage ou une position sur la surface inclinée (10Ab) dans laquelle la surface inclinée (10Ab) a une plus grande épaisseur que la position dans laquelle la rainure (20) peut faire face à l'extrémité de la partie de couche épaisse (R).

5. Enclume de soudage par ultrasons (4) selon l'une quelconque des revendications 1 à 4, **caractérisée en ce que** : sur un côté de la surface de pression en forme de bande (10), l'enclume de soudage par ultrasons (4) a une partie de guidage en résine (10D) qui guide latéralement la résine fondue.

6. Enclume de soudage par ultrasons (4) selon l'une quelconque des revendications 1 à 5, **caractérisée en ce que** : sur un côté de la surface de pression en forme de bande (10), l'enclume de soudage par ultrasons (4) a une pluralité d'éléments de bloc (40) qui sont agencés dans la même direction qu'une direction d'extension de la surface de pression (10) et espacés les uns des autres, et la pluralité d'éléments de bloc (40) a une hauteur non supérieure à une hauteur de la surface de pression (10).

7. Appareil de soudage par ultrasons comprenant : l'enclume de soudage par ultrasons (4) selon l'une quelconque des revendications 1 à 6.

# FIG.1

# FIG.2

# FIG.3

(a)

(b)

# FIG.4

# FIG.5

## FIG.6

## FIG.7

P
PRESSURE

SEALING DIRECTION

# FIG.8

(a)

20

10Ab

(b)

20

10Ab

(c)

20

10Ab

# FIG.9

# FIG.10

# FIG.11

# FIG.12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4093775 B
- JP 3904675 B
- WO 2017038330 A1
- EP 1066951 A2